# EUROPEAN PATENT SPECIFICATION

(11) **EP 2 322 360 B1**
(45) Date of publication and mention of the grant of the patent: **15.06.2016**
(21) Application number: 10191003.2
(22) Date of filing: 12.11.2010
(51) Int. Cl.: B60C 15/06

(54) **Heavy duty tire**
Schwerlastreifen
Pneu pour fonctionnement intensif

(30) Priority: 13.11.2009 US 618064; 21.09.2010 US 886879
(43) Date of publication of application: 18.05.2011
(73) Proprietor: The Goodyear Tire & Rubber Company, Akron, OH 44316-0001 (US)
(72) Inventor: Venkataramani, Gayathri, Mansfield, OH 44903 (US); Bachir, Mohamad Afif, Medina, OH 44256 (US); Wells, Dale Eugene, Massillon, OH 44646 (US)
(74) Representative: Kutsch, Bernd

(56) References cited:
- WO-A1-2007/042119
- DE-A1-102006 011 158
- GB-A- 2 024 119
- JP-A- H1 076 822
- US-A- 3 722 568
- US-A- 4 227 563
- US-A- 5 196 077

## Description

### Technical Field

This invention relates to a pneumatic tire, in particular to a heavy duty pneumatic tire such as are commonly used on earthmoving equipment, aircraft, and agricultural tires.

### Background

The invention concerns the reduction of rim chafing particularly in large, heavy load tires or off-the-road tires of radial construction that are used in heavily loaded vehicles. The lower sidewall of a typical radial OTR construction consists of a ply around the bead and chipper reinforcements that restrict the circumferential deformation of the ply. Under heavy load, the lower sidewall of the tire bends over the rim flange, and the ply reinforcement rotates in the circumferential direction. The severe deformation results in high ply cord compression in the turn-up near the rim flange region, and high in-plane shear strains in the turn-up pad. The deformation also results in rubbing of the chafer against the rim flange, resulting in wear of both the tire and rim. Chafing can be minimized by using reinforcements in the lower sidewall, but this reduction is not very significant. Thus it is desired to have an improved tire design to reduce the chafing of the tire against the rim.

JP-A- 10-76822 describes a tire in accordance with the preamble of claim 1.

US-A- 5,196,077 describes a tire having a bead portion in which two reinforcing layers comprising a steel cord reinforcing layer and a fiber cord reinforcing layer are arranged outer to a turn-up portion of a carcass layer and are covered with a rubber stock.

### Disclosure of the Invention

The invention discloses a tire in accordance with claim 1.

Dependent claims refer to preferred embodiments of the invention.

### Definition

"Aspect ratio" of the tire means the ratio of its section height (SH) to its section width (SW).
"Axial" and "axially" mean lines or directions that are parallel to the axis of rotation of the tire.
"Bead" means that part of the tire comprising an annular tensile member wrapped by ply cords and shaped, with or without other reinforcement elements such as flippers, chippers, apexes, toe guards and chafers, to fit the design rim.
"Belt reinforcing structure" means one or at least two layers of plies of parallel cords, woven or unwoven, underlying the tread, unanchored to the bead, and preferably having both left and right cord angles for instance in the range from 17 degrees to 27 degrees with respect to the equatorial plane of the tire.
"Carcass" means the tire structure apart from the belt structure, tread, under tread, and sidewall rubber over the plies, but including the beads.
"Circumferential" means lines or directions extending along the perimeter of the surface of the annular tread perpendicular to the axial direction.
"Chafers" refers to narrow strips of material placed around the outside of the bead to protect cord plies from the rim, distribute flexing above the rim, and to seal the tire.
"Chippers" means a reinforcement structure located in the bead portion of the tire.
"Cord" means one of the reinforcement strands which the plies in the tire comprise.
"Design rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization - Standards Manual and the term design rim means the same as the standard measurement rims. In Japan, the standard organization is The Japan Automobile Tire Manufacturer's Association.
"Equatorial plane (EP)" means the plane perpendicular to the tire's axis of rotation and passing through the center of its tread.
"Innerliner" means the layer or layers of elastomer or other material that form the inside surface of a tubeless tire and that contain the inflating fluid within the tire.
"Normal rim diameter" means the average diameter of the rim flange at the location where the bead portion of the tire seats.
"Normal inflation pressure" refers to the specific design inflation pressure and load assigned by the appropriate standards organization for the service condition for the tire.
"Normal load" refers to the specific design inflation pressure and load assigned by the appropriate standards organization for the service condition for the tire.
"Ply" means a continuous layer of rubber-coated parallel cords.
"Radial" and "radially" mean directions radially toward or away from the axis of rotation of the tire.
"Radial-ply tire" means belted or circumferentially-restricted pneumatic tire in which the ply cords which extend from the bead to bead are laid at cord angles between 65 degrees and 90 degrees with respect to the equatorial plane of the tire.
"Section height" (SH) means the radial distance from the nominal rim diameter to the outer diameter of the tire at its equatorial plane.
"Section width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.
'Turn-up pad" means a strip or layer of elastomeric material or comprising elastomeric material located in the lower sidewall of the tire.

### Brief Description of Drawings

The invention may take physical form and certain parts and arrangements of parts, several preferred embodiments of which will be described in detail in this specification and illustrated in the accompanying drawings which form a part whereof and wherein:
Figure 1 is a cross-sectional view illustrating one side or one-half of a symmetrical heavy duty tire according to a first embodiment of the invention;
Figure 2 is an enlarged cross-sectional view of the bead portion of the tire shown in Figure 1;
Figure 3 is an enlarged cross-sectional view illustrating the bead portion of a baseline tire;
Figure 4 is an enlarged cross-sectional view of a second embodiment of a bead portion of the tire of Figure 1;
Figure 5 illustrates a plot of Frictional Energy for the baseline tire and the tire having the split pad design;
Figure 6 is an enlarged cross-sectional view of a third embodiment of a lower sidewall portion of a tire;
Figure 7 illustrates an enlarged cross-sectional view of a lower sidewall portion of a tire illustrating how the turnup ply - turndown ply gauge, the turn-up pad gauge and the bead width are measured;
Figure 8 illustrates a graph of ply cord compression for the tire of Ex. 1 versus the base line tire;
Figure 9 illustrates a graph of rim chafing indicator for the tire of Ex. 1 versus the base line tire; and
Figure 10 illustrates a graph of turn-up pad strain for the tire of Ex. 1 versus the base line tire.

### Detailed Description of the invention

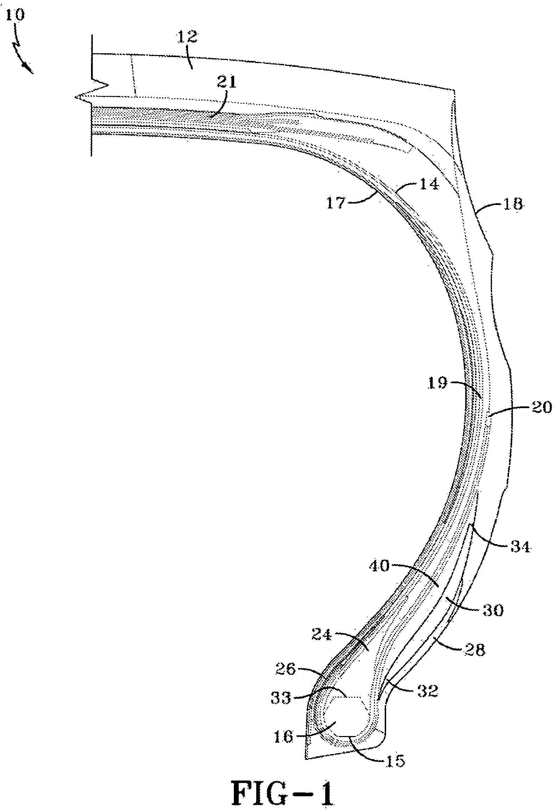

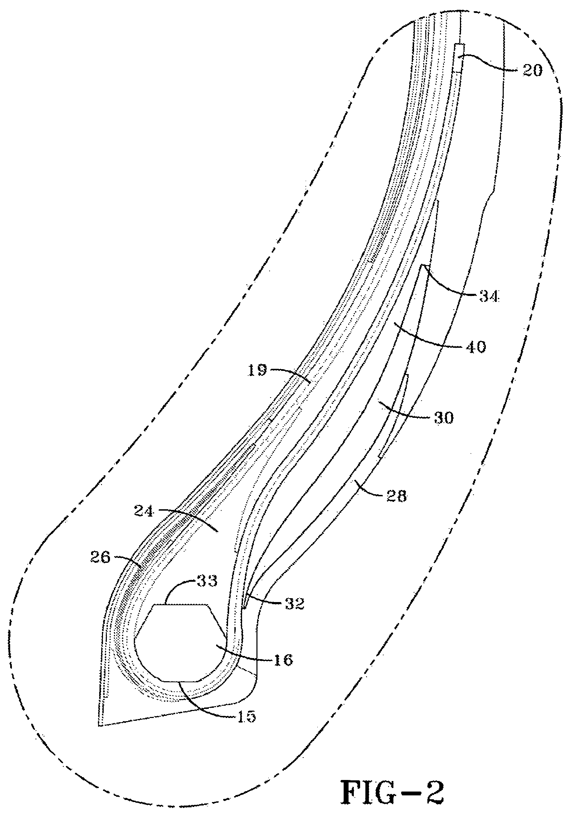

With reference to Figs. 1 and 2, a cross-sectional view of one half of a tire 10 of the present invention is illustrated. The tire 10 has a carcass 14 which includes a crown region having a radially outer tread 12 disposed over the crown region of the carcass 14. The outer surface of the tread may further include a plurality of lands and grooves or a plurality of tread blocks and grooves, as commonly known to those skilled in the art. The carcass further includes an optional inner liner 17 that covers the entire interior facing surface of the tire carcass and serves to hold the air or gas mixture that is used to inflate the tire. The inner liner of the tire is typically made of butyl rubber. The carcass 14 further includes a pair of tire sidewalls 18 which extend radially inward from the outer radial surface of the of the tire carcass, terminating in the vicinity of a pair of inextensible annular tensile members or beads 16.

The annular beads 16 illustrate an asymmetrical cross sectional shape having a lower half with a rounded outer surface 15 and an upper half portion 33 with angular outer edges similar to half of a hexagon. The annular beads may comprise other shapes such as, for example, round, hexagonal or a combination of shapes. Preferably, the radially innermost surface 15 of the bead wire is rounded.

The carcass further includes one or more preferably steel cord reinforced plies 19 wrapped about each bead 16 forming a turnup portion 20, more preferably an envelope turnup. The portion of the ply which extends from the crown towards the bead and is axially inwards of the bead is referred to as the down portion of the ply or down ply, while the portion of the ply which extends radially and axially outwards from the bead is referred to as the up ply or turnup portion. The one or more plies 19 are preferably oriented in the radial direction. Disposed radially outwardly of the ply 19 in the crown area of the tire is a preferably steel reinforced belt package 21 formed of preferably two or more belts. A pair of sidewalls 18 extend radially inward from the tread 12 to the bead area. Located radially outward of the bead 16 is an elastomeric apex 24. The apex as shown may have a triangular cross-sectional shape. Wrapped around the bead 16 is a flipper 26. The flipper 26 is located adjacent the bead 16 and the carcass ply 19. Located on the axially inner edge of the bead area is a chafer 28.

A first turn-up pad 30 is located adjacent the chafer 28 in the bead portion of the tire. The first turn-up pad 30 has a first end 32 located in the vicinity of the bead wire 16, and more preferably in line with the radially outer surface 33 of the bead wire. The first turn-up pad 30 has a second end 34 located between the first end 32 and the ply turnup 20. The length of the first turn-up pad 30 is sized so that it is positioned over the 90 degree bend of the rim when the tire is under load. The first turn-up pad 30 has a thickness in the range of 10.16 mm to 40.64 mm, and more preferably in the range of 20.32 mm to 30.48 mm. The thickness of the turn-up pad 30 is measured across the cross section of the pad, perpendicular to the pad longitudinal axis. The length of the first turn-up pad 30 may range from 200 mm to 400 mm, preferably 250 mm to 350 mm. The first turn-up pad 30 comprises of an elastomeric or rubber material having a G' which ranges from 0.25 MPa to 0.6 MPa and more particularly in the range of 0.35 MPa to 0.5 MPa, and more particularly 0.35 to 0.47 MPa. The first turn-up pad 30 is made of a material having a G" which ranges from 0.05 MPa to 0.8 MPa and more particularly 0.05 MPa to 0.07 MPa.

Unless otherwise noted, all G' values are measured on a rubber sample at a sample temperature of 90 deg C, at a measurement frequency of 10 Hz and at a strain amplitude of 50%. The rubber sample is taken from a cured tire manufactured to the desired manufacturer specifications. For the purposes of this invention, the storage modulus property G' is a viscoelastic property of a rubber composition and may be determined by a dynamic mechanical analyzer over a range of frequencies, temperature and strain amplitude. One example of a dynamic mechanical analyzer (DMA) suitable for measuring G', G" is model number DMA +450 sold by the 01-dB Metravib company. The DMA instrument uses dynamic mechanical analysis to evaluate rubber compositions. A cured sample of the respective rubber composition is subjected to a precisely controlled dynamic excitation (frequency and amplitude) at a frequency (Hertz) and temperature (°C) and the sample stress response is observed by the instrument. The observed sample response can be separated, by the instrument, into viscous or loss modulus (G") and elastic or storage modulus (G') components. Unless otherwise indicated, all G" are measured at the same conditions as G'.

A second turn-up pad 40 is located adjacent said first turn-up pad 30, and is preferably located between the first turn-up pad 30 and the ply 19. The second turn-up pad 40 has a thickness in the range of 10.16 mm to 50.8 mm, and more preferably in the range of 20.32 mm 30.48 mm. The length of the second turn-up pad 40 may range from 200 mm to 500 mm, preferably 300 mm to 450 mm. The second turn-up pad 40 comprises an elastomeric or rubber material having a storage modulus G' which ranges from 0.05 MPa to 2 MPa and more preferably in the range of 0.6 to 1.5 MPa and more preferably in the range of 0.8 to 1.2 MPa. The turn-up pad 30 is made of a material having a G" which ranges from 0.05 MPa to 0.1 MPa. Thus it is desired that the first turn-up pad 30 be 40% to 60% softer than the second turn-up pad 40. Thus it is desired that the first turn-up pad 30 have a G' 40% to 60% less than the G' of the second turn-up pad 40, and more preferably 45% to 55% and most preferably 50% or about 50% less.

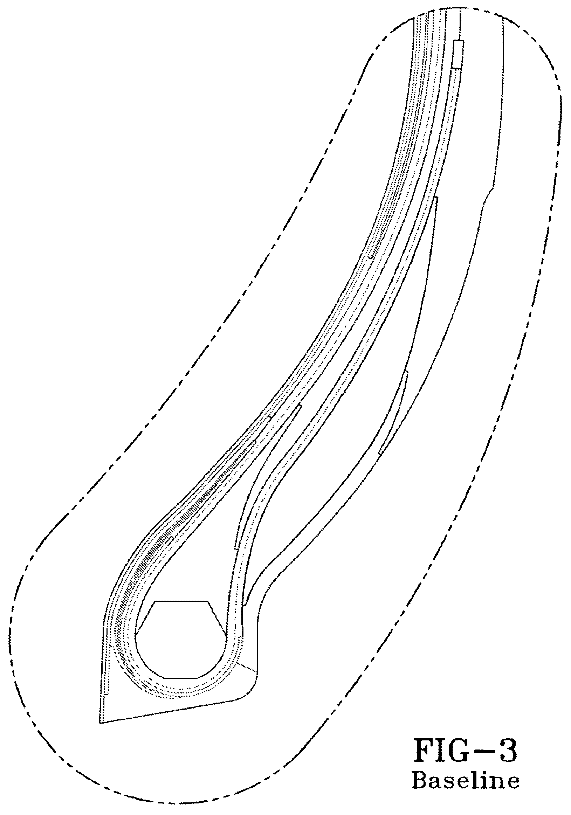

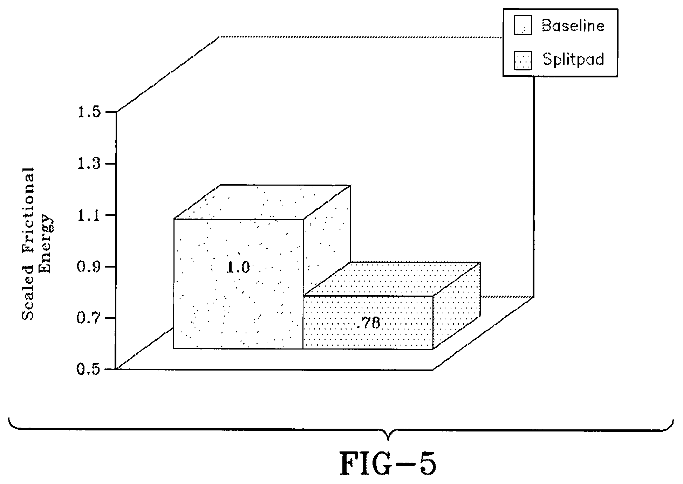

As shown in Figure 2, the length and thickness of the first turn-up pad 30 is the same or slightly smaller than the second turn-up pad 40. A reduction in the stiffness of rubber of the first turn-up pad 30 minimizes the tangential traction between the chafer 28 and rim thereby significantly reducing rim chafing. Finite element analysis of the invention has shown significant reduction in rim chafing. Figure 5 illustrates the calculated accumulated frictional energy levels of the baseline turn-up pad of Figure 3 versus the accumulated frictional energy level of the split pad of Figure 2. The baseline turn-up pad has a G' similar to that of second turn-up pad 40 and a thickness of 20.066 mm at a radius of 101.6 mm from the bead center, and a thickness of 44.704 mm at a radius of 203.2 mm from the bead center. With the split pad embodiment, rim chafing between chafer and rim is reduced by 18% to 22%.

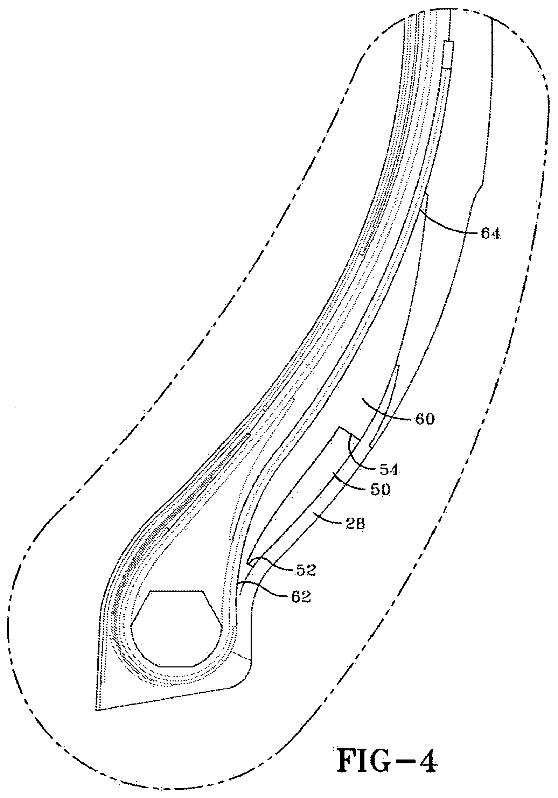

Figure 4 illustrates a second embodiment of the invention wherein the first turn-up pad 50 has a modified geometry. The first turn-up pad 50 is located in the region where the sidewall contacts the rim flange at a radius R, wherein R ranges from 127 mm to 203.2 mm and has a minimum thickness in the range of 20.32 mm to 30.48 mm. The first end 52 of the first turn-up pad 50 is located radially outward of the bead, and has a second end 54 that is located radially inward of the outer tip of the apex. The first turn-up pad 50 comprises an elastomeric or rubber material having a G' which ranges from 0.25 MPa to 0.6 MPa and more particularly in the range of 0.35 MPa to 0.47 MPa, and more particularly 0.4 to 0.45 MPa. The first turn-up pad 30 is made of a material having a G" which ranges from 0.05 MPa to 0.08 MPa.

As shown in Figure 4, the second turn-up pad 60 has a maximum thickness of 1.5 to 2 times as thick as the first turn-up pad 50. The second turn-up pad 60 has a first end 62 located at the annular bead, and a second end 64 which extends radially outward of the apex tip and the second end 54 of the first turn-up pad 50. The length of the second turn-up pad is 1.5 to 3 times the length of the first turn-up pad. The second turn-up pad 60 comprises an elastomeric or rubber material having a storage modulus G' which ranges from 0.5 MPa to 2 MPa and more preferably in the range of 0.6 to 1.5 MPa and more preferably in the range of 0.8 to 1.2 MPa. The turn-up pad 30 is made of a material having a G" which ranges from 0.05 MPa to 0.1 MPa.

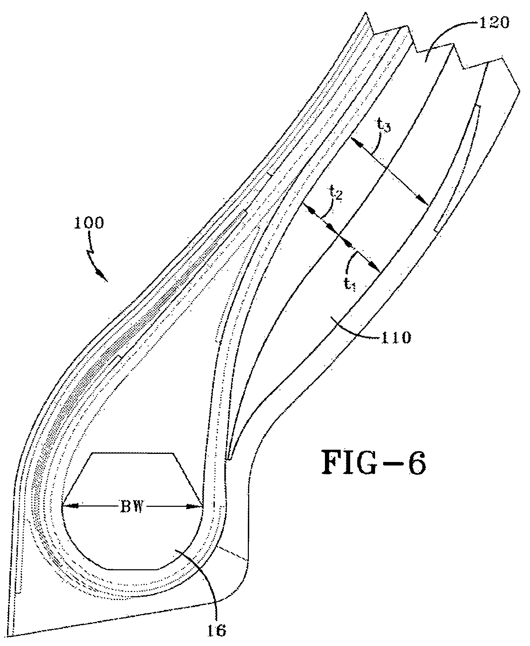

Figure 6 illustrates yet another alternate embodiment of a tire 100 of the present invention illustrating only the bead and lower sidewall area. The remaining areas of the tire are as described in more detail, above. When there is a durability issue in the lower sidewall, tire designers have historically increased the bead diameter in order to reduce the stress/strain in the lower sidewall. An increase in bead width increases the compressive force in the ply cord while achieving only moderate decrease in the stress/strain in the lower sidewall. The inventor has found that a combination of reduction in bead width and increase in turn-up pad thickness yields the most desirable results that are not intuitive. It is desirable to reduce the bead width BW of the annular tensile member 16 to the range of 50.8 mm to 76.2 mm, more particularly in the range of 60.96 mm to 67.31 mm, and more preferably 60.96 mm to 63.5 mm.

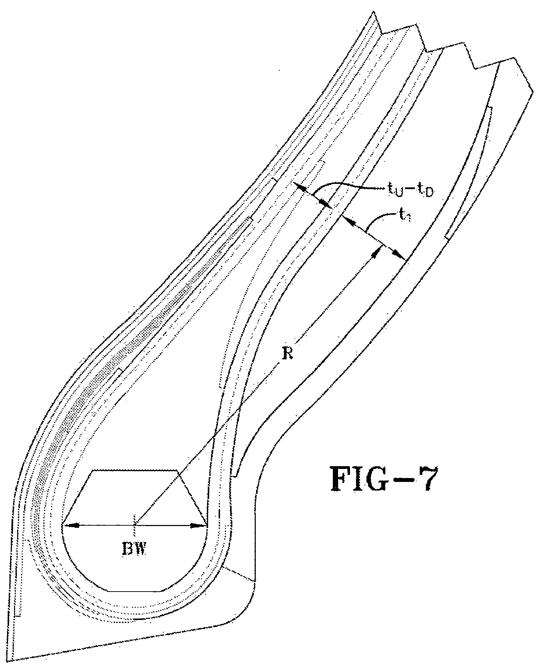

It has also been determined that by reducing the gauge or distance between the ply turnup and the ply turndown (hereinafter "turnup-turndown gauge" t_{U}-t_{D}) as shown in Figure 7, that the ply cord compression is reduced. It has been found that the effect of decreasing the gauge between ply turnup and ply turndown on the ply cord compression is more pronounced as the turn-up pad gauge increases. The distance or gauge is measured perpendicular to the longitudinal axis of the ply. It is thus desired to have the turnup-turndown gauge t_{U}-t_{D} to be in the range of 7.24 mm to 20.32 mm and more particularly in the range of 10.16 mm to 15.24 mm, and most preferably 10.16 to 12.7 mm. The turnup-turndown gauge is measured over a range of radius R from the center of annular tensile member. It is additionally preferred that the turnup-turndown gauge previously stated occur at a radius of about 203.2 from the bead center. At a radius of about 101.6 mm from the bead center, it is desired to have the turnup-turndown gauge to be in the range of 31.75 mm to 44.45 mm and more particularly in the range of 35.56 mm to 43.18 mm, and most preferably 38.1 mm to 40.64 mm.

Figure 6 further illustrates a first turn-up pad 110 and a second turn-up pad 120. The first turn-up pad 110 has a minimum thickness t₁ in the range of 12.7 mm to 43.18 mm, and more preferably in the range of 15.24 mm to 30.48 mm. The thickness is measured at a defined radius from the bead center, and is determined perpendicular to the longitudinal axis of the ply reinforcement. The minimum thickness of the first turn-up pad is determined over a range of radius R as measured from the center of the annular tensile member. The radius R ranges from 101.6 mm 203.2 mm. The length of the first turn-up pad 110 may range from 200 mm to 400 mm. The first turn-up pad 110 has a maximum thickness in the range of from 33.02 mm to 76.2 mm, and more preferably in the range of from 33.02 mm to 50.8 mm, preferably at a radius R of 203.2 mm.

The second turn-up pad 120 is located between the first turn-up pad and the ply turnup, and is preferably located between the first turn-up pad 110 and the ply 19. The second turn-up pad 120 has a minimum thickness in the range of 12.7 mm to 43.18 mm, and more preferably in the range of 12.7 mm inches to 30.48 mm. The second turn-up pad 120 has a maximum thickness in the range of from 33.02 mm to 76.2 mm, and more preferably in the range of 33.02 mm to 50.8 mm. The thickness of the second turn-up pad is determined at a first radius R measured from the center of the annular tensile member. The maximum thickness preferably occurs over the radius R of 152.4 mm to 203.2 mm from the bead center, and the minimum thickness preferably occurs over the radius R of 101.6 mm to 152.4 mm. The length of the second turn-up pad 120 may range from 200 mm to 500 mm.

The first turn-up pad 110 comprises an elastomeric or rubber material having a G' which ranges from 0.25 MPa to 0.6 MPa and more particularly in the range of 0.35 MPa to 0.47 MPa, and more particularly 0.4 to 0.45 MPa. The first tum-up pad 110 comprises a material having a G" which ranges from 0.05 MPa to 0.08 MPa.

The second turn-up pad 120 comprises an elastomeric or rubber material having a storage modulus G' which ranges from 0.5 MPa to 2 MPa and more preferably in the range of 0.6 to 1.5 MPa and more preferably in the range of 0.8 to 1.2 MPa. The turn-up pad 120 comprises a material having a G" which ranges from 0.05 MPa to 0.1 MPa.

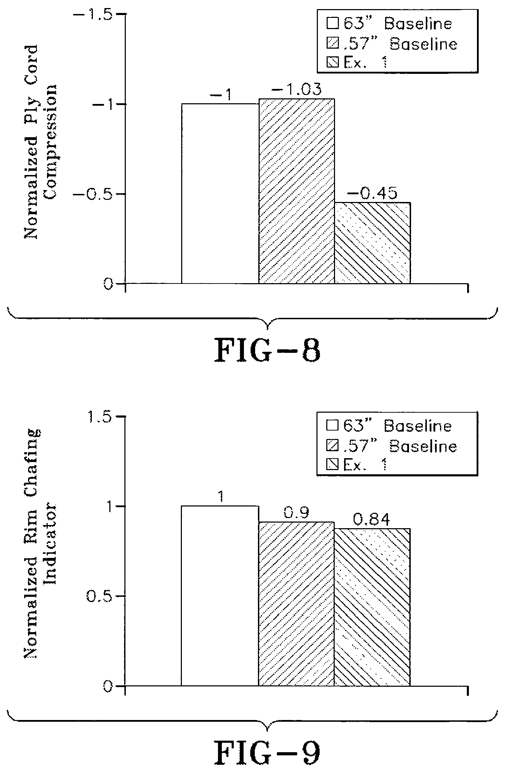

Figures 8 through 10 illustrate the results from numerical simulation study of a tire of the invention in a 57 inch size and a 63 inch size as compared to a baseline design in a 57 inch and 63 inch size. The baseline design had a rim size of 63 inch, a bead width of 80 mm and a turnup-turndown gauge of 28.7 mm at a radius of 203.2 mm from the bead center. The baseline tire had a turn-up pad gauge of 44.5 mm as measured at a radius of 203.2 mm from the bead center. Example 1 tire had a 63 inch rim size, an annular tensile member having a width of 67.3 mm, and a turn-up pad thickness of 64 mm. The pad was evenly divided into two materials as shown in Fig. 6, wherein the G' of the axially outer turn-up pad was 0.4 to 1.2 MPa and the G' of the axially inner turn-up pad was 0.8 to 2.8 MPa. The thickness of each turn-up pad was 12.7 mm to 33 mm at a radius of 101.6 mm to 203.2 mm from the bead center. The Exampe 1 tire had a bead width of 67.31 mm, a ply turnup ply-turndown gauge of 11.43 mm at a radius of 203.2 mm from the bead center.

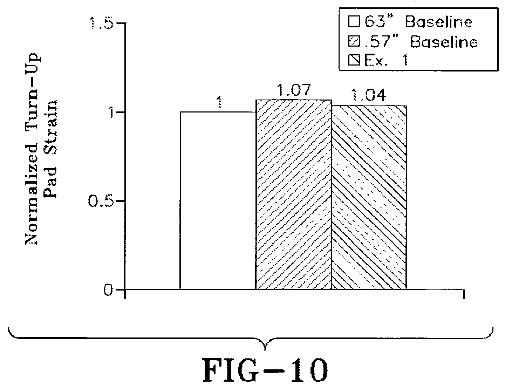

Figure 8 illustrates a significant 55% reduction of ply cord compression for the inventive tire of Example 1 as compared to the baseline design. Figure 9 illustrates a reduction of 16% in the rim chafing indicator for the tire of Example 1 as compared to the baseline tire. Figure 10 illustrates that the strain in the turn-up pad is the same for the base line design and the tire of Example 1.

## Claims

1. A pneumatic tire comprising a carcass (14), the carcass (14) having one or more cord reinforced plies (19) and a pair of bead portions, each bead portion having at least one annular inextensible bead core (16) about which the cord reinforced plies (19) are wrapped, a tread (12) and a belt reinforcing structure (21) disposed radially outward of the carcass (14), the bead portion further comprising an apex (24) which extends radially outward of the bead core (16) and a chafer (28), the tire further comprising a first turn-up pad (30) comprising an elastomeric material, the first turn-up pad (30) being located adjacent the chafer (28), and a second turn-up pad (40) comprising an elastomeric material, the second turn-up pad (40) being located between the one or more plies (19) and the first turn-up pad (30) and/or adjacent the first turn-up pad (30), wherein the elastomeric material of the first turn-up pad (30) has an elastomeric or storage modulus G' less than the elastomeric or storage modulus G' of the elastomeric material of the second turn-up pad (40), **characterized in that** the second turn-up pad (60) has a radially outer end (64) which is radially outward of the apex (24).

2. The tire of claim 1 wherein the bead core (16) comprises an annular tensile member having a width less than 82 mm.

3. The tire of claim 1 or 2 wherein the G' of the elastomeric material of the first turn-up pad (30) is in the range of from 20% to 60% less than the G' of the elastomeric material of the second turn-up pad (40).

4. The tire of claim 1 or 2 wherein the G' of the elastomeric material of the first turn-up pad (30) is in the range of from 30% to 55% less than the G' of the elastomeric material of the second turn-up pad (40).

5. The tire of claim 1 or 2 wherein the G' of the elastomeric material of the first turn-up pad (30) is in the range of from 40% to 55% less than the G' of the elastomeric material of the second turn-up pad (40).

6. The tire of claim 1 or 2 wherein the thickness of the first turn-up pad (30) is the same as the thickness of the second turn-up pad (40).

7. The tire of at least one of the previous claims wherein the first turn-up pad (30) has a radially outer end (34) which is radially outward of the apex (24).

8. The tire of at least one of the previous claims wherein the first turn-up pad (30) has a radially outer end (34) which is radially inward of the apex (24).

9. The tire of at least one of the previous claims wherein the second turn-up pad (40) is in the radial direction longer than the first turn-up pad (30).

10. The tire of at least one of the previous claims wherein the maximum thickness of the second turn-up pad (40) is greater than the maximum thickness of the first turn-up pad (30).

11. The tire of claim 10 wherein the maximum thickness of the second turn-up pad (40) is 1.5 times to 2.5 times greater, preferably twice as great or about twice as great, as the maximum thickness of the first turn-up pad (30).

12. The tire of at least one of the previous claims wherein the annular tensile member of the bead core (16) has a width less than 81.3 mm and/or wherein the annular tensile member has a width in the range of from 50.8 mm to 76.2 mm.

13. The tire of at least one of the previous claims wherein the annular tensile member of the bead core (16) has a width in the range of from 60.9 mm to 67.3 mm, alternately 60.9 mm to 63.5 mm.

14. The tire of at least one of the previous claims wherein the one or more plies (19) have a turndown portion which extends from the crown and axially inward of the bead core (16) and a turnup portion (20) which extends radially outward from the bead core (16) and axially outward of the bead core (16), wherein the gauge (t_{U}-t_{D}) between the turnup portion (20) and the turndown portion is less than 45.8 mm.

15. The tire of claim 14 wherein the wherein the gauge (t_{U}-t_{D}) between the turnup portion (20) and the turndown portion is in the range of from 31.7 mm to 44.5 mm.

## Patentansprüche

1. Luftreifen, umfassend eine Karkasse (14), wobei die Karkasse (14) eine oder mehrere kordverstärkte Karkassenlagen (19) und ein Paar Wulstbereiche aufweist, wobei jeder Wulstbereich mindestens einen ringförmigen, nicht dehnbaren Wulstkern (16) aufweist, um den die kordverstärkten Karkassenlagen (19) herumgeschlagen sind, eine Lauffläche (12) und eine Gürtelverstärkungsstruktur (21), die radial auswärts von der Karkasse (14) angeordnet sind, wobei der Wulstbereich weiter ein Kernprofil (24), das sich radial auswärts von dem Wulstkern (16) erstreckt, und einen Wulstschutzstreifen (28) umfasst, wobei der Reifen weiter eine erste Umschlageinlage (30) umfasst, die ein Elastomermaterial umfasst, wobei die erste Umschlageinlage (30) sich benachbart zu dem Wulstschutzstreifen (28) befindet, und eine zweite Umschlageinlage (40), die ein Elastomermaterial umfasst, wobei die zweite Umschlageinlage (40) sich zwischen der einen oder den mehreren Karkassenlagen (19) und der ersten Umschlageinlage (30) und/oder benachbart zu der ersten Umschlageinlage (30) befindet, wobei das elastische Material der ersten Umschlageinlage (30) einen Elastomer- oder Speichermodul G' aufweist, der kleiner als der Elastomer- oder Speichermodul G' des Elastomermaterials der zweiten Umschlageinlage (40) ist, **dadurch gekennzeichnet, dass** die zweite Umschlageinlage (60) ein radial äußeres Ende (64) aufweist, das sich radial auswärts von dem Kernprofil (24) befindet.

2. Reifen nach Anspruch 1, wobei der Wulstkern (16) ein ringförmiges Zugelement mit einer Breite von weniger als 82 mm aufweist.

3. Reifen nach Anspruch 1 oder 2, wobei der G' des Elastomermaterials der ersten Umschlageinlage (30) im Bereich von 20% bis 60% weniger als der G' des Elastomermaterials der zweiten Umschlageinlage (40) liegt.

4. Reifen nach Anspruch 1 oder 2, wobei der G' des Elastomermaterials der ersten Umschlageinlage (30) im Bereich von 30% bis 55% weniger als der G' des Elastomermaterials der zweiten Umschlageinlage (40) liegt.

5. Reifen nach Anspruch 1 oder 2, wobei der G' des Elastomermaterials der ersten Umschlageinlage (30) im Bereich von 40% bis 55% weniger als der G' des Elastomermaterials der zweiten Umschlageinlage (40) liegt.

6. Reifen nach Anspruch 1 oder 2, wobei die Dicke der ersten Umschlageinlage (30) dieselbe ist wie die Dicke der zweiten Umschlageinlage (40).

7. Reifen nach mindestens einem der vorhergehenden Ansprüche, wobei die erste Umschlageinlage (30) ein radial äußeres Ende (34) aufweist, das sich radial auswärts von dem Kernprofil (24) befindet.

8. Reifen nach mindestens einem der vorhergehenden Ansprüche, wobei die erste Umschlageinlage (30) ein radial äußeres Ende (34) aufweist, das sich radial einwärts von dem Kernprofil (24) befindet.

9. Reifen nach mindestens einem der vorhergehenden Ansprüche, wobei die zweite Umschlageinlage (40) in radialer Richtung länger ist als die erste Umschlageinlage (30).

10. Reifen nach mindestens einem der vorhergehenden Ansprüche, wobei die maximale Dicke der zweiten Umschlageinlage (40) größer ist als die maximale Dicke der ersten Umschlageinlage (30).

11. Reifen nach Anspruch 10, wobei die maximale Dicke der zweiten Umschlageinlage (40) 1,5 Mal bis 2,5 Mal größer, bevorzugt zweimal so groß oder ungefähr zweimal so groß, ist wie die maximale Dicke der ersten Umschlageinlage (30).

12. Reifen nach mindestens einem der vorhergehenden Ansprüche, wobei das ringförmige Zugelement des Wulstkerns (16) eine Breite von weniger als 81,3 mm aufweist und/oder wobei das ringförmige Zugelement eine Breite im Bereich von 50,8 mm bis 76,2 mm aufweist.

13. Reifen nach mindestens einem der vorhergehenden Ansprüche, wobei das ringförmige Zugelement des Wulstkerns (16) eine Breite im Bereich von 60,9 mm bis 67,3 mm, alternativ 60,9 mm bis 63,5 mm, aufweist.

14. Reifen nach mindestens einem der vorhergehenden Ansprüche, wobei die eine oder mehreren Karkassenlagen (19) einen nach unten gerichteten Umschlagteil, der sich ab dem Zenit und axial einwärts von dem Wulstkern (16) erstreckt, und einen nach oben gerichteten Umschlagteil (20), der sich radial auswärts von dem Wulstkern (16) und axial auswärts von dem Wulstkern (16) erstreckt, aufweisen, wobei das Dickenmaß (t_{U}-t_{D}) zwischen dem nach oben gerichteten Umschlagteil (20) und dem nach unten gerichteten Umschlagteil weniger als 45,8 mm beträgt.

15. Reifen nach Anspruch 14, wobei das Dickenmaß (t_{U}-t_{D}) zwischen dem nach oben gerichteten Umschlagteil (20) und dem nach unten gerichteten Umschlagteil im Bereich von 31,7 mm bis 44,5 mm liegt.

## Revendications

1. Bandage pneumatique comprenant une carcasse (14), la carcasse (14) comportant une ou plusieurs nappes (19) renforcées avec des câblés, et une paire de portions faisant office de talons, chaque portion faisant office de talon possédant au moins une tringle de talon annulaire inextensible (16) autour de laquelle viennent s'enrouler les nappes (19) renforcées avec des câblés, une bande de roulement (12) et une structure de renforcement de ceinture (21) disposée en direction radiale à l'extérieur de la carcasse (14), la portion faisant office de talon comprenant en outre un bourrage sur tringle (24) qui s'étend en direction radiale à l'extérieur de la tringle de talon (16), et une bandelette talon (28), le bandage pneumatique comprenant en outre un premier rembourrage de retournement vers le haut (30) comprenant une matière élastomère, et un deuxième rembourrage de retournement vers le haut (40) comprenant une matière élastomère, le deuxième rembourrage de retournement vers le haut (40) étant disposé entre lesdites une ou plusieurs nappes (19) et le premier rembourrage de retournement vers le haut (30) et/ou en position adjacente au premier rembourrage de retournement vers le haut (30), la matière élastomère du premier rembourrage de retournement vers le haut (30) possédant un module élastomère ou de stockage G' inférieur au module élastomère ou de stockage G' de la matière élastomère du deuxième rembourrage de retournement vers le haut (40), **caractérisé en ce que** le deuxième rembourrage de retournement vers le haut (60) possède une extrémité externe en direction radiale (64) qui est disposée en direction radiale à l'extérieur du bourrage sur tringle (24).

2. Bandage pneumatique selon la revendication 1, dans lequel la tringle de talon (16) comprend un élément de traction annulaire dont la largeur est inférieure à 82 mm.

3. Bandage pneumatique selon la revendication 1 ou 2, dans lequel la valeur G' de la matière élastomère du premier rembourrage de retournement vers le haut (30) est inférieure, dans la plage de 20 % à 60 %, à la valeur G' de la matière élastomère du deuxième rembourrage de retournement vers le haut (40).

4. Bandage pneumatique selon la revendication 1 ou 2, dans lequel la valeur G' de la matière élastomère du premier rembourrage de retournement vers le haut (30) est inférieure, dans la plage de 30 % à 55 %, à la valeur G' de la matière élastomère du deuxième rembourrage de retournement vers le haut (40).

5. Bandage pneumatique selon la revendication 1 ou 2, dans lequel la valeur G' de la matière élastomère du premier rembourrage de retournement vers le haut (30) est inférieure, dans la plage de 40 % à 55 %, à la valeur G' de la matière élastomère du deuxième rembourrage de retournement vers le haut (40).

6. Bandage pneumatique selon la revendication 1 ou 2, dans lequel l'épaisseur du premier rembourrage de retournement vers le haut (30) est égale à l'épaisseur du deuxième rembourrage de retournement vers le haut (40).

7. Bandage pneumatique selon au moins une des revendications précédentes, dans lequel le premier rembourrage de retournement vers le haut (30) possède une extrémité externe (34) en direction radiale qui est disposée en direction radiale à l'extérieur du bourrage sur tringle (24).

8. Bandage pneumatique selon au moins une des revendications précédentes, dans lequel le premier rembourrage de retournement vers le haut (30) possède une extrémité externe (34) en direction radiale qui est disposée en direction radiale à l'intérieur du bourrage sur tringle (24).

9. Bandage pneumatique selon au moins une des revendications précédentes, dans lequel le deuxième rembourrage de retournement vers le haut (40) est plus long, en direction radiale, que le premier rembourrage de retournement vers le haut (30).

10. Bandage pneumatique selon au moins une des revendications précédentes, dans lequel l'épaisseur maximale du deuxième rembourrage de retournement vers le haut (40) est supérieure à l'épaisseur maximale du premier rembourrage de retournement vers le haut (30).

11. Bandage pneumatique selon la revendication 10, dans lequel l'épaisseur maximale du deuxième rembourrage de retournement vers le haut (40) est supérieure à concurrence de 1,5 fois à 2,5 fois, de préférence deux fois supérieure ou environ deux fois supérieure, à l'épaisseur maximale du premier rembourrage de retournement vers le haut (30).

12. Bandage pneumatique selon au moins une des revendications précédentes, dans lequel l'élément de traction annulaire de la tringle de talon (16) possède une largeur inférieure à 81,3 mm et/ou dans lequel l'élément de traction annulaire possède une largeur dans la plage de 50,8 mm à 76,2 mm.

13. Bandage pneumatique selon au moins une des revendications précédentes, dans lequel l'élément de traction annulaire de la tringle de talon (16) possède une largeur dans la plage de 60,9 mm à 67,3 mm, en variante de 60,9 mm à 63,5 mm.

14. Bandage pneumatique selon au moins une des revendications précédentes, dans lequel lesdites une ou plusieurs nappes (19) possèdent une portion de retournement vers le bas qui s'étend à partir du sommet et en direction axiale à l'intérieur de la tringle de talon (16) et une portion de retournement vers le haut (20) qui s'étend en direction radiale à l'extérieur de la tringle de talon (16) et en direction axiale à l'extérieur de la tringle de talon (16), l'épaisseur (t_{U}-t_{D}) entre la portion de retournement vers le haut (20) et la portion de retournement vers le bas étant inférieure à 45,8 mm.

15. Bandage pneumatique selon la revendication 14, dans lequel l'épaisseur (t_{U}-t_{D}) entre la portion de retournement vers le haut (20) et la portion de retournement vers le bas se situe dans la plage de 31,7 mm à 44,5 mm.
